# FASCICULE DE BREVET EUROPEEN

(11) **EP 2 337 712 B1**
(45) Date de publication et mention de la délivrance du brevet: **03.07.2013**
(21) Numéro de dépôt: 09736997.9
(22) Date de dépôt: 22.10.2009
(51) Int. Cl.: B60R 25/02, E05B 17/20

(54) **DISPOSITIF ANTIVOL DE DIRECTION POUR VEHICULE AUTOMOBILE**
LENKUNGSDIEBSTAHLSCHUTZVORRICHTUNG FÜR EIN KRAFTFAHRZEUG
STEERING ANTITHEFT DEVICE FOR AN AUTOMOBILE

(30) Priorité: 23.10.2008 FR 0805887
(43) Date de publication de la demande: 29.06.2011
(73) Titulaire: Valeo Sécurité Habitacle, 94046 Créteil Cedex (FR)
(72) Inventeur: MALTAVERNE, Fréderic, F-94042 Creteil (FR); PERRIN, Christophe, F-94042 Creteil (FR)
(74) Mandataire: Larger, Solène
(86) Numéro de dépôt international: PCT/EP2009/063882
(87) Numéro de publication internationale: WO 2010/046438

(56) Documents cités:
- DE-C1- 10 119 267
- DE-U1- 9 208 698
- FR-A- 2 909 953

## Description

La présente invention concerne un dispositif antivol destiné à sécuriser un mécanisme de direction de véhicule. Plus particulièrement, la présente invention concerne un dispositif antivol mettant en oeuvre un pêne mobile à même d'être verrouillé par des moyens de supercondamnation.

Les dispositifs d'antivol comportent des moyens de verrouillage comportant un pêne monté mobile dans une première partie du corps de l'antivol, entre une position décondamnée dans laquelle il est destiné à être disposé à distance d'une colonne de direction, et une position condamnée dans laquelle il est destiné à bloquer ladite colonne. Le pêne est commandé en déplacement par l'intermédiaire d'un verrou rotatif intégré dans une seconde partie de l'antivol.

Certains antivols à sécurité renforcée comprennent en outre des moyens de supercondamnation aptes à bloquer le pêne en position condamnée, en cas de tentative d'effraction. Une personne mal intentionnée peut en effet décider de casser le corps de l'antivol pour accéder au pêne, afin de le désactiver en vue de libérer la rotation de la colonne de direction. La présence des moyens de supercondamnation permet de maintenir le pêne dans sa position condamnée, de sorte que la colonne demeure malgré tout bloquée en rotation.

On connaît du document FR2909953 un tel dispositif antivol comportant des moyens de supercondamnation à même d'immobiliser le pêne en cas de séparation des deux parties de l'antivol, la mise en oeuvre des moyens de supercondamnation étant commandée par le déplacement d'un élément déclencheur qui est monté amovible depuis une position de maintien dans laquelle il condamne toute activation desdits moyens de supercondamnation, l'élément déclencheur étant maintenu en position de maintien par un rotor du verrou.

On connaît les documents DE 92 08 698, DE101 19 267, et FR 2 909 953 portant sur des dispositifs d'antivol de direction pour véhicule automobile.

La présente invention vise à proposer un dispositif d'antivol plus facile à agencer, moins encombrant et plus robuste que celui de l'état de la technique.

A cet effet, l'invention à pour objet un dispositif antivol de direction pour véhicule automobile, comportant un corps d'antivol à l'intérieur duquel est destiné à être inséré et solidarisé un verrou comprenant :

A cet effet, l'invention à pour objet un dispositif antivol de direction pour véhicule automobile, comportant un corps d'antivol à l'intérieur duquel est destiné à être inséré et solidarisé un verrou comprenant :
- des moyens de verrouillage comportant :
- un pêne monté mobile entre une position décondamnée dans laquelle il est destiné à être disposé à distance d'une colonne de direction, et une position condamnée dans laquelle il est destiné à bloquer ladite colonne et,
- un coulisseau d'entraînement du pêne apte à entraîner le pêne en position condamnée ou décondamnée, et dont le déplacement est commandé par ledit verrou,
- des moyens de supercondamnation aptes à bloquer le pêne en position condamnée,
caractérisé en ce que lesdits moyens de supercondamnation sont retenus dans une position passive par un élément déclencheur dudit coulisseau d'entraînement desdits moyens de verrouillage et en ce que ledit élément déclencheur est sollicité à l'encontre d'une came du verrou pour d'une part commander l'entraînement du pêne et d'autre part, libérer lesdits moyens de supercondamnation en cas de désolidarisation de ladite came.

Les moyens de supercondamnation sont ainsi mis en oeuvre par les moyens de verrouillage coopérant avec la came du verrou, de sorte que la désolidarisation de la came engendrée par l'arrachement du verrou ou d'une partie du corps de l'antivol, provoque la supercondamnation du pêne. Cet agencement rend le dispositif antivol moins encombrant et plus facile à agencer. Le dispositif antivol est en outre sensiblement plus robuste que ceux de l'état de la technique.

Selon une ou plusieurs caractéristiques du dispositif antivol prise seule ou en combinaison,
- la désolidarisation de ladite came est obtenue par l'arrachement du verrou,
- ladite came présente une butée pour ledit élément déclencheur dans la position condamnée pour empêcher le pêne d'atteindre la position décondamnée par l'exercice d'une force sur le pêne distincte de celle exercée par le coulisseau d'entraînement,
- ladite came présente une forme générale cylindrique dont une face latérale présente une rampe latérale pour coopérer avec l'élément déclencheur et un logement de blocage comportant ladite butée en bout de ladite rampe pour coopérer avec l'élément déclencheur dans la position condamnée,
- ledit élément déclencheur est apte à coulisser dans un guide dudit coulisseau entre une position de maintien dans laquelle ledit élément déclencheur est couplé auxdits moyens de supercondamnation et la position supercondamnée dans laquelle ledit élément déclencheur est à distance desdits moyens de supercondamnation,
- lesdits moyens de supercondamnation comportent un pion de supercondamnation présentant un orifice adapté pour recevoir une extrémité dudit élément déclencheur pour que ledit élément déclencheur retienne le pion de supercondamnation dans la position passive,
- lesdits moyens de supercondamnation sont portés par le pêne et ledit pion est sollicité à l'encontre d'un logement correspondant ménagé dans ledit corps d'antivol,
- ledit corps d'antivol est formé d'une première partie logeant les moyens de verrouillage et lesdits moyens de supercondamnation et d'une seconde partie à l'intérieur de laquelle est destiné à être inséré et solidarisé le verrou, ladite seconde partie étant réalisée en un matériau présentant une masse spécifique inférieure à la masse spécifique du matériau de ladite première partie,
- ladite seconde partie est réalisée au moins en partie en plastique et/ou au moins en partie en magnésium.
- ladite première partie est réalisée en alliage à base de zinc, d'aluminium et de magnésium,
- lesdits moyens de supercondamnation sont sollicités dans une position supercondamnée de blocage du pêne et retenus dans une position passive par la coopération de ladite première et ladite seconde partie, de sorte que l'arrachement de ladite seconde partie libère lesdits moyens de supercondamnation en position supercondamnée.

D'autres avantages et caractéristiques apparaîtront à la lecture de la description de l'invention, ainsi que sur les figures annexées sur lesquelles :
- la figure 1 représente une vue en perspective d'un dispositif antivol à l'état assemblé,
- la figure 2 représente le dispositif antivol de la figure 1 avec une première partie désolidarisée d'une seconde partie,
- la figure 3 est une vue en coupe et de côté d'un détail d'un dispositif antivol à l'état condamné selon un premier mode de réalisation,
- la figure 4 est une vue de côté d'éléments d'un dispositif antivol selon un deuxième mode de réalisation,
- la figure 5A est une vue en coupe et de dessus d'un détail d'un dispositif antivol à l'état condamné selon un troisième mode de réalisation et,
- la figure 5B est une vue analogue du dispositif antivol de la figure 5A à l'état supercondamné.

Sur ces figures, les éléments identiques portent les mêmes numéros de référence.

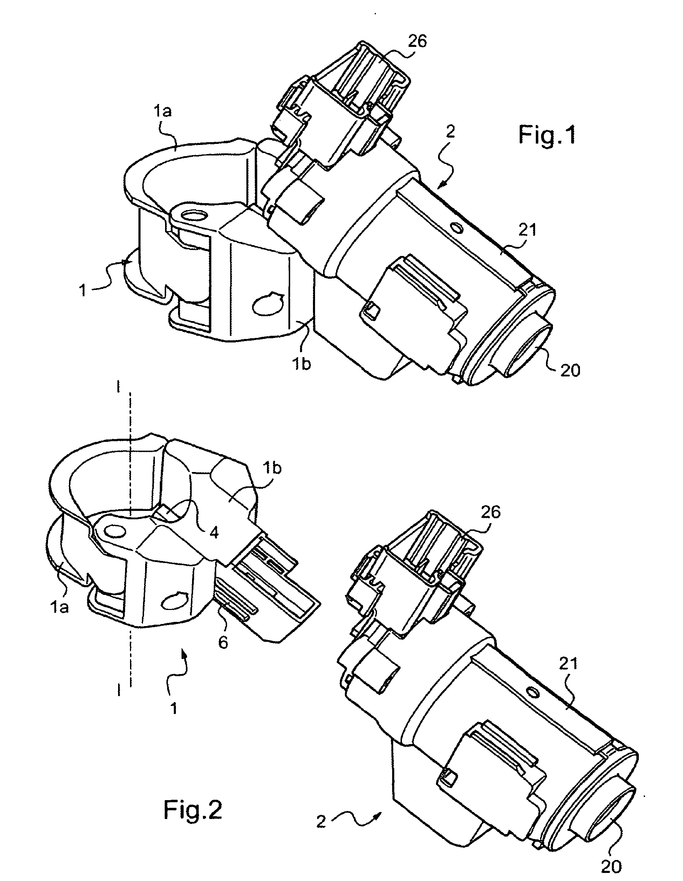

Les figures 1 à 4, 5A et 5B illustrent un dispositif antivol de direction pour véhicule automobile, comportant un corps d'antivol comprenant une première et une seconde partie 1, 2 (voir plus précisément la figure 2).

La première partie 1 comporte par exemple un collier de serrage comprenant deux demi-colliers 1a, 1b reliés d'une part, par une liaison pivotante 1-1 et d'autre part, par des moyens de fixation, tels que des vis de serrage, pour s'assembler autour d'une colonne de direction.

La première partie 1, et plus particulièrement un demi-collier 1b, loge des moyens de verrouillage et des moyens de supercondamnation.

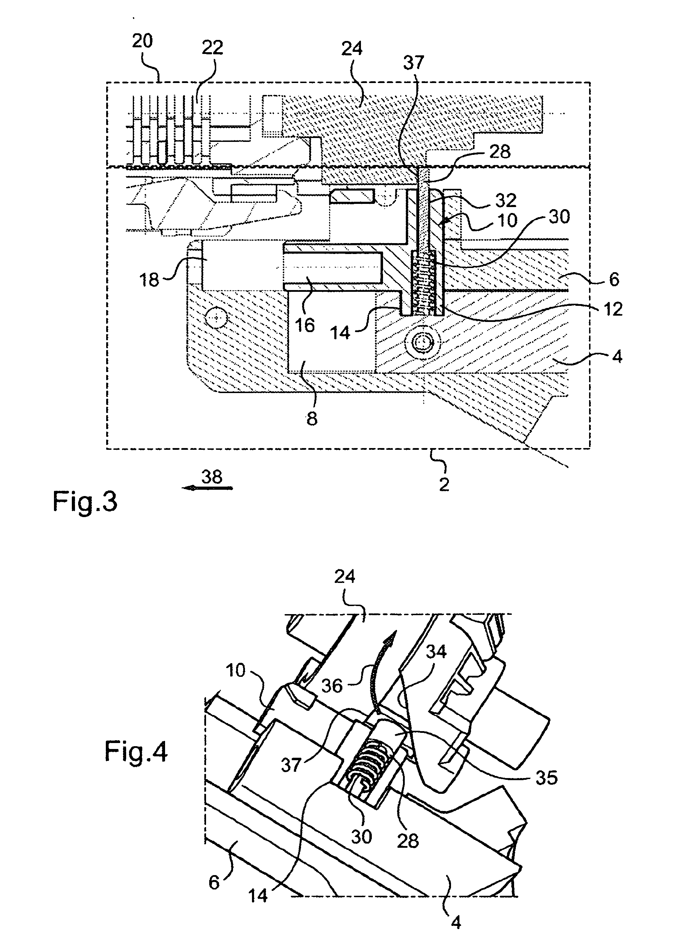

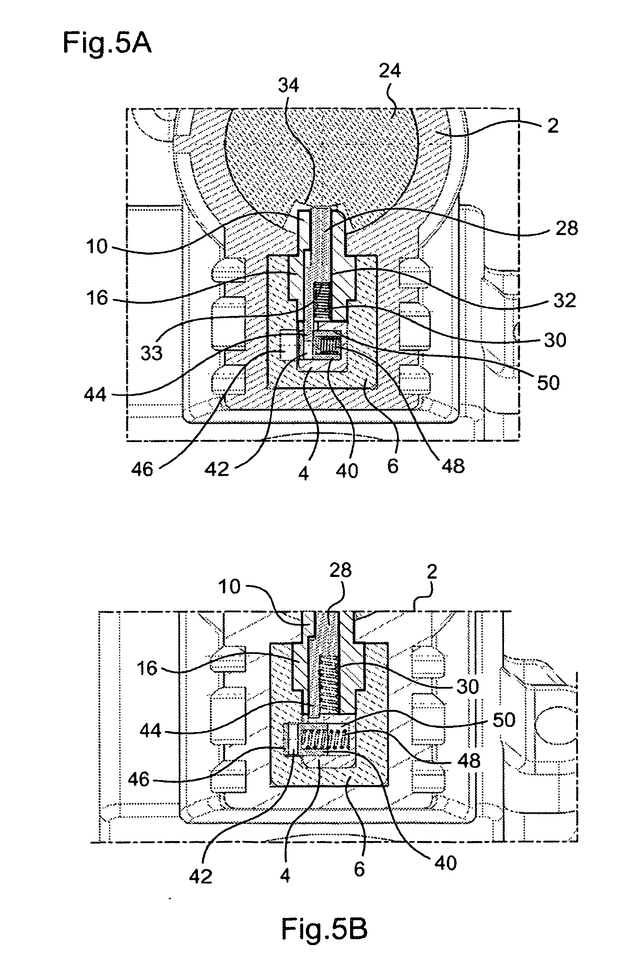

Mieux visibles sur la figure 3, les moyens de verrouillage comportent un pêne 4 monté mobile entre une position décondamnée dans laquelle il est destiné à être disposé à distance d'une colonne de direction (non représenté), et une position condamnée (figures 3, 5A et 5B) dans laquelle il est destiné à bloquer la colonne.

Le pêne 4 est monté coulissant dans la première partie 1 du corps d'antivol, via un guide pêne 6 dont on distingue la surface extérieure sur la figure 2. Ainsi, dans la position décondamnée, le pêne 4 est en position escamotée arrière, c'est-à-dire, complètement rentré à l'intérieur du guide pêne 6 et occupe l'espace 8 à l'extrémité non débouchante du guide pêne 6. En outre, dans la position condamnée, le pêne 4 fait saillie à l'extrémité débouchante du guide pêne 6 de manière à pouvoir coopérer classiquement par emboîtement avec un élément de la colonne de direction (figure 2).

En revenant à la figure 3, on distingue que les moyens de verrouillage comportent en outre un coulisseau d'entraînement 10 du pêne apte à entraîner le pêne 4 en position condamnée ou décondamnée.

Le coulisseau d'entraînement 10 présente par exemple une protubérance 12 conformée pour s'assembler solidairement avec une rainure correspondante 14 ménagée sur le pêne 4, de manière à entraîner le pêne 4 le long du guide pêne 6. Pour plus de stabilité, le coulisseau d'entraînement présente par exemple un prolongement 16 conformé pour coulisser dans un épaulement 18 correspondant du guide pêne 6.

Le déplacement du coulisseau 10 est commandé par un verrou 20 destiné à être inséré et solidarisé à l'intérieur d'un stator de verrou 21 de la seconde partie 2 du corps d'antivol.

Le verrou 20 comporte un rotor 22 et une came 24 solidarisée à l'extrémité arrière rotor 22. Le rotor 22 et la came 24 sont agencés pour tourner en rotation dans le stator de verrou 21. En outre, dans la position condamnée, la came 24 peut être solidarisée au stator de verrou 21 par un crochet amovible non représenté.

Le verrou 20 est également destiné à commander l'activation des fonctions électriques du véhicule, ainsi que le démarrage du moteur. Il est couplé par l'intermédiaire de la came 24 à un interrupteur destiné à être logé dans un connecteur adapté 26 de la seconde partie 2 du corps d'antivol (voir figure 2).

On peut également prévoir que la seconde partie 2 du corps d'antivol soit destinée à comporter les moyens décodeurs du dispositif antivol permettant de décoder le code d'une clef du verrou 20 (non représenté).

Selon un mode de réalisation, la seconde partie 2 est réalisée en un matériau présentant une masse spécifique inférieure à la masse spécifique du matériau de la première partie 1 et la première partie 1 comporte des moyens de supercondamnation agencés pour bloquer le pêne 4 en position condamnée en cas d'arrachement de la seconde partie 2.

La seconde partie 2 est par exemple réalisée au moins en partie en plastique. On prévoit par exemple un plastique comportant au moins 50% de fibres de verre. En alternative ou en complément, on prévoit que la seconde partie 2 est réalisée au moins en partie en magnésium.

En outre, la première partie 1 est par exemple réalisée en alliage à base de zinc, aluminium et magnésium avec parfois du cuivre. Ce type d'alliage est mieux connu sous la dénomination « Zamak » (marque déposée). Les proportions moyennes pour la réalisation de l'alliage sont par exemple de 95 % de zinc, de 4 % d'aluminium, de 1 % de cuivre et d'environ 0,03 % de magnésium. Ce type d'alliage présente l'avantage d'être résistant et facile à travailler. De plus, il ne s'oxyde pas et est idéal pour le moulage sous pression car il a une très bonne fluidité.

Ainsi, le corps d'antivol est réalisé en deux matériaux distincts pour la première 1 et la seconde partie 2. Le matériau de la seconde partie 2, par exemple en plastique ou en magnésium est plus léger que le matériau de la première partie 1, en alliage, de sorte que le poids du corps d'antivol est diminué (le corps d'antivol pèse entre 500 à 600 g au lieu de 800 à 900 g). En outre, la seconde partie 2 étant plus vulnérable, elle va servir de « fusible » en cas de tentative d'arrachement, et céder en premier, laissant la première partie 1 de meilleure résistance mécanique en position sur la colonne, l'arrachement de la seconde partie déclenchant les moyens de supercondamnation.

Comme on peut le voir sur les figures 3, 4 et 5A et 5B, les moyens de supercondamnation sont retenus dans une position passive par un élément déclencheur 28 du coulisseau d'entraînement 10 des moyens de verrouillage.

L'élément déclencheur 28 est sollicité, par des moyens de rappel élastique 30, tel qu'un ressort, à l'encontre de la came 24 du verrou 20, pour d'une part, coopérer lors d'une utilisation normale pour commander l'entraînement du pêne 4 et d'autre part, libérer les moyens de supercondamnation en cas de désolidarisation de la came du verrou 20. La désolidarisation de la came du verrou 20 est réalisée par exemple par l'arrachement du verrou 20 ou plus généralement, en cas de rupture du stator de verrou 21 lorsque la came 24 est solidarisée au stator de verrou 21 en position condamnée.

Les moyens de supercondamnation sont ainsi mis en oeuvre par les moyens de verrouillage coopérant avec la came 24 du verrou 20, de sorte que l'arrachement du verrou 20 ou la rupture du corps de l'antivol provoque la supercondamnation du pêne 4. Cet agencement rend le dispositif antivol moins encombrant et plus facile à agencer. Le dispositif antivol est en outre sensiblement plus robuste que ceux de l'état de la technique.

A cet effet, l'élément déclencheur 28 est par exemple apte à coulisser dans un guide du coulisseau 10 entre d'une part, une position de maintien dans laquelle les moyens de supercondamnation sont en position passive et d'autre part, une position supercondamnée.

Dans la position de maintien, l'élément déclencheur 28 est couplé aux moyens de supercondamnation pour les retenir en position passive et empêcher leur activation. L'élément déclencheur 28 peut alors entraîner librement le pêne 4. Dans la position supercondamnée, l'élément déclencheur 28 est à distance des moyens de supercondamnation.

Le guide du coulisseau 10 est par exemple formé par une rainure transversale 32 débouchant à une extrémité sur une surface active de la came 24 et débouchant à l'autre extrémité, face aux moyens de supercondamnation.

La came 24 présente par exemple une forme générale cylindrique dont une face latérale présente une rampe 34 pour coopérer avec l'élément déclencheur 28 et un logement de blocage 35 orienté radialement vers l'intérieur de la came 24.

La rampe latérale 34 provoque le coulissement de l'élément déclencheur 28 selon la flèche 36 (figure 4), lors de la rotation du verrou 20 de manière que le coulisseau 10 et donc le pêne 4, soit entraîné en coulissement dans le guide pêne 6.

Le logement de blocage 35 présente une butée 37 pour l'élément déclencheur 28 dans la position condamnée pour empêcher le pêne 4 d'atteindre la position décondamnée par l'exercice d'une force sur le pêne 4 distincte de celle exercée par le coulisseau d'entraînement 10.

La force distincte peut provenir de l'exercice d'une force magnétique d'un aimant de forte puissance mise en face du pêne 4 par une personne mal intentionnée ou en essayant de faire bouger le pêne 4 dans le guide pêne 6 à l'aide d'un crochet.

Le logement de blocage 35 est situé en bout de la rampe 34 pour coopérer avec l'élément déclencheur 28 dans la position condamnée. La butée 37 est susceptible de coopérer avec une face de l'élément déclencheur 28 opposée de celle coopérant avec la rampe 34.

Les moyens de verrouillage coopèrent ainsi avec le verrou 20 via la butée 37, pour empêcher le pêne 4 de reprendre la position escamotée dans le sens de la flèche 38 sur la figure 3.

Selon un premier mode de réalisation illustré sur la figure 3, l'élément déclencheur 28 présente la forme d'une tige et la rainure transversale 32 présente une forme correspondante avec une portion plus large pour loger le moyen de rappel élastique 30 dont l'axe de compression est confondu avec l'axe longitudinal de la tige.

Selon le deuxième mode de réalisation de la figure 4, l'élément déclencheur 28 présente la forme d'une tige comprenant une portion rétrécie autour de laquelle est agencé le ressort 30. La rainure transversale 32 présente une forme droite correspondante.

Dans le troisième mode de réalisation des figures 5A et 5B, l'élément déclencheur 28 est une tirette présentant une forme en escalier pour loger le moyen de rappel élastique 30 à l'arrière de la marche 33 de la tirette et la rainure transversale 32 présente une forme correspondante en escalier.

Ainsi, l'élément déclencheur 28 est bloqué en position de maintien par la came 24 du verrou 20 de sorte que l'arrachement de la seconde partie 2 du corps d'antivol libère la mobilité de l'élément déclencheur 28 qui est alors entraîné en déplacement hors de la position de maintien, provoquant ainsi la mise en oeuvre des moyens de supercondamnation.

Pour cela, et comme représenté sur les figures 5A et 5B, les moyens de supercondamnation comportent par exemple un pion de supercondamnation 40 monté mobile en déplacement entre une position passive et une position active dans laquelle il bloque le déplacement du pêne 4.

Le pion 40 présente un orifice 42, par exemple traversant, adapté pour recevoir une extrémité 44 de l'élément déclencheur 28 de sorte que l'élément déclencheur 28 retienne le pion de supercondamnation 40 dans la position passive.

Les moyens de supercondamnation sont par exemple portés par le pêne 4 et le pion 40 est sollicité à l'encontre d'un logement 46 correspondant ménagé dans le guide pêne 6 de la première partie 1, au moyen d'un rappel élastique 48, tel qu'un ressort dont une extrémité est fixée au pêne 4 et qui entraîne en permanence le pion 40 vers la position supercondamnée.

Ainsi, dans la position passive (figure 5A), le pion 40 est disposé à distance du logement 46, et est emboîté dans une encoche 50 ménagée dans le pêne 4. En outre, dans la position supercondamnée (figure 5B), le pion 40 s'engage en partie dans le logement 46 et bloque le déplacement du pêne 4.

Ainsi, le dispositif antivol est moins encombrant, plus facile à agencer et sensiblement plus robuste que ceux de l'état de la technique.

## Revendications

1. Dispositif antivol de direction pour véhicule automobile, comportant un corps d'antivol à l'intérieur duquel est destiné à être inséré et solidarisé un verrou (20) comprenant :
- des moyens de verrouillage comportant :
- un pêne (4) monté mobile entre une position décondamnée dans laquelle il est destiné à être disposé à distance d'une colonne de direction, et une position condamnée dans laquelle il est destiné à bloquer ladite colonne et,
- un coulisseau d'entraînement (10) du pêne apte à entraîner le pêne (4) en position condamnée ou décondamnée, et dont le déplacement est commandé par ledit verrou (20),
- des moyens de supercondamnation aptes à bloquer le pêne (4) en position condamnée,
**caractérisé en ce que** lesdits moyens de supercondamnation sont retenus dans une position passive par un élément déclencheur (28) dudit coulisseau d'entraînement (10) desdits moyens de verrouillage et **en ce que** ledit élément déclencheur (28) est sollicité à l'encontre d'une came (24) du verrou (20) pour d'une part commander l'entraînement du pêne (4) et d'autre part, libérer lesdits moyens de supercondamnation en cas de désolidarisation de ladite came (24).

2. Dispositif antivol selon la revendication 1, **caractérisé en ce que** la désolidarisation de ladite came (24) est obtenue par l'arrachement du verrou (20).

3. Dispositif antivol selon l'une quelconque des revendications 1 ou 2, **caractérisé en ce que** ladite came (24) présente une butée (37) pour ledit élément déclencheur (28) dans la position condamnée pour empêcher le pêne (4) d'atteindre la position décondamnée par l'exercice d'une force sur le pêne (4) distincte de celle exercée par le coulisseau d'entraînement (10).

4. Dispositif antivol selon la revendication 3, **caractérisé en ce que** ladite came (24) présente une forme générale cylindrique dont une face latérale présente une rampe latérale (34) pour coopérer avec l'élément déclencheur (28) et un logement de blocage (35) comportant ladite butée (37) en bout de ladite rampe (34) pour coopérer avec l'élément déclencheur (28) dans la position condamnée.

5. Dispositif antivol selon l'une quelconque des revendications 1 à 4, **caractérisé en ce que** ledit élément déclencheur (28) est apte à coulisser dans un guide dudit coulisseau (10) entre une position de maintien dans laquelle ledit élément déclencheur (28) est couplé auxdits moyens de supercondamnation et la position supercondamnée dans laquelle ledit élément déclencheur (28) est à distance desdits moyens de supercondamnation.

6. Dispositif antivol selon la revendication 5, **caractérisé en ce que** lesdits moyens de supercondamnation comportent un pion de supercondamnation (40) présentant un orifice (42) adapté pour recevoir une extrémité (44) dudit élément déclencheur (28) pour que ledit élément déclencheur (28) retienne le pion de supercondamnation (40) dans la position passive.

7. Dispositif antivol selon la revendication 6, **caractérisé en ce que** lesdits moyens de supercondamnation sont portés par le pêne (4) et **en ce que** ledit pion (40) est sollicité à l'encontre d'un logement (46) correspondant ménagé dans ledit corps d'antivol.

8. Dispositif antivol selon l'une quelconque des revendications précédentes, **caractérisé en ce que** ledit corps d'antivol est formé d'une première partie (1) logeant les moyens de verrouillage et lesdits moyens de supercondamnation et d'une seconde partie à l'intérieur de laquelle est destiné à être inséré et solidarisé le verrou (20), ladite seconde partie (2) étant réalisée en un matériau présentant une masse spécifique inférieure à la masse spécifique du matériau de ladite première partie (1).

9. Dispositif antivol selon la revendication 8, **caractérisé en ce que** ladite seconde partie (2) est réalisée au moins en partie en plastique et/ou au moins en partie en magnésium.

10. Dispositif antivol selon l'une quelconque des revendications 8 ou 9, **caractérisé en ce que** ladite première partie (1) est réalisée en alliage à base de zinc, d'aluminium et de magnésium.

11. Dispositif antivol selon l'une quelconque des revendications 8 à 10, **caractérisé en ce que** lesdits moyens de supercondamnation sont sollicités dans une position supercondamnée de blocage du pêne (4) et retenus dans une position passive par la coopération de ladite première (1) et ladite seconde partie (2), de sorte que la l'arrachement de ladite seconde partie (1, 2) libère lesdits moyens de supercondamnation en position supercondamnée.

## Patentansprüche

1. Lenk-Diebstahlsicherung für ein Kraftfahrzeug, die einen Diebstahlsicherungskörper aufweist, in dessen Inneres ein Riegel (20) eingeführt und fest verbunden werden soll, der enthält:
- Verriegelungseinrichtungen, die aufweisen:
- einen Bolzen (4), der zwischen einer entriegelten Stellung, in der er dazu bestimmt ist, in Abstand zu einer Lenksäule angeordnet zu sein, und einer verriegelten Stellung beweglich montiert ist, in der er dazu bestimmt ist, die Säule zu blockieren, und
- einen Antriebsschieber (10) des Bolzens, der den Bolzen (4) in die verriegelte oder die entriegelte Stellung antreiben kann und dessen Verschiebung vom Riegel (20) gesteuert wird,
- Sicherheitsverriegelungseinrichtungen, die den Bolzen (4) in der verriegelten Stellung blockieren können,
wobei die Sicherheitsverriegelungseinrichtungen von einem Auslöseelement (28) in einer passiven Stellung gehalten werden, wobei das Auslöseelement (28) gegen eine Nocke (24) des Riegels (20) beaufschlagt wird, um einerseits den Antrieb des Bolzens (4) zu steuern und andererseits die Sicherheitsverriegelungseinrichtungen im Fall des Lösens der Nocke (24) freizugeben, **dadurch gekennzeichnet, dass** das Auslöseelement Teil des Antriebsschiebers (10) der Verriegelungseinrichtungen ist.

2. Diebstahlsicherung nach Anspruch 1, **dadurch gekennzeichnet, dass** das Lösen der Nocke (24) durch das Abreißen des Riegels (20) erhalten wird.

3. Diebstahlsicherung nach einem der Ansprüche 1 oder 2, **dadurch gekennzeichnet, dass** die Nocke (24) einen Anschlag (37) für das Auslöseelement (28) in der verriegelten Stellung aufweist, um den Bolzen (4) daran zu hindern, die entriegelte Stellung durch die Ausübung einer Kraft auf den Bolzen (4) zu erreichen, die sich von derjenigen unterscheidet, die vom Antriebsschieber (10) ausgeübt wird.

4. Diebstahlsicherung nach Anspruch 3, **dadurch gekennzeichnet, dass** die Nocke (24) eine allgemein zylindrische Form, von der eine Seitenfläche eine seitliche Rampe (34), um mit dem Auslöseelement (28) zusammenzuwirken, und eine Blockieraufnahme (35) aufweist, die den Anschlag (37) am Ende der Rampe (34) aufweist, um mit dem Auslöseelement (28) in der verriegelten Stellung zusammenzuwirken.

5. Diebstahlsicherung nach einem der Ansprüche 1 bis 4, **dadurch gekennzeichnet, dass** das Auslöseelement (28) in einer Führung des Schiebers (10) zwischen einer Haltestellung, in der das Auslöseelement (28) mit den Sicherheitsverriegelungseinrichtungen gekoppelt ist, und der sicherheitsverriegelten Stellung gleiten kann, in der das Auslöseelement (28) von den Sicherheitsverriegelungseinrichtungen entfernt ist.

6. Diebstahlsicherung nach Anspruch 5, **dadurch gekennzeichnet, dass** die Sicherheitsverriegelungseinrichtungen einen Sicherheitsverriegelungszapfen (40) tragen, der eine Öffnung (42) aufweist, die geeignet ist, um ein Ende (44) des Auslöseelements (28) aufzunehmen, damit das Auslöseelement (28) den Sicherheitsverriegelungszapfen (40) in der passiven Stellung hält.

7. Diebstahlsicherung nach Anspruch 6, **dadurch gekennzeichnet, dass** die Sicherheitsverriegelungseinrichtungen vom Bolzen (4) getragen werden, und dass der Zapfen (40) gegen eine entsprechende Aufnahme (46) beaufschlagt wird, die im Diebstahlsicherungskörper ausgebildet ist.

8. Diebstahlsicherung nach einem der vorhergehenden Ansprüche, **dadurch gekennzeichnet, dass** der Diebstahlsicherungskörper aus einem ersten Teil (1), in dem die Verriegelungseinrichtungen und die Sicherheitsverriegelungseinrichtungen untergebracht sind, und aus einem zweiten Teil besteht, in dessen Inneres der Riegel (20) eingeführt und fest verbunden werden soll, wobei der zweite Teil (2) aus einem Material hergestellt ist, das eine spezifische Masse geringer als die spezifische Masse des Materials des ersten Teils (1) aufweist.

9. Diebstahlsicherung nach Anspruch 8, **dadurch gekennzeichnet, dass** der zweite Teil (2) zumindest zum Teil aus Kunststoff und/oder zumindest zum Teil aus Magnesium hergestellt ist.

10. Diebstahlsicherung nach einem der Ansprüche 8 oder 9, **dadurch gekennzeichnet, dass** der erste Teil (1) aus einer Legierung auf der Basis von Zink, Aluminium und Magnesium hergestellt ist.

11. Diebstahlsicherung nach einem der Ansprüche 8 bis 10, **dadurch gekennzeichnet**, die Sicherheitsverriegelungseinrichtungen in eine sicherheitsverriegelte Stellung der Blockierung des Bolzens (4) beaufschlagt und durch die Zusammenwirkung des ersten (1) und des zweiten Teils (2) in einer passiven Stellung gehalten werden, so dass das Abreißen des zweiten Teils (1, 2) die Sicherheitsverriegelungseinrichtungen in der sicherheitsverriegelten Stellung freigibt.

## Claims

1. Steering antitheft device for a motor vehicle, comprising an antitheft body inside which is intended to be inserted and attached a lock (20) comprising:
- locking means comprising:
- a sliding bolt (4) mounted to move between an unlocked position in which it is intended to be positioned at a distance from a steering column, and a locked position in which it is intended to immonilize said column and,
- a driving slide-bar (10) for driving the sliding bolt and capable of driving the sliding bolt (4) into the locked or unlocked position, and the displacement of which is controlled by said lock (20),
- super-locking means capable of immonilizing the sliding-bolt (4) in the locked position,
said super-locking means being retained in a passive position by a trigger element (28), said trigger element (28) being stressed against a cam (24) of the lock (20) in order, on the one hand, to control the driving of the sliding bolt (4) and, on the other hand, to release said super-locking means in case of disengagement of said cam (24), **characterized in that** the trigger element forms part of the driving slide-bar (10) of said locking means.

2. Antitheft device according to Claim 1, **characterized in that** the disengagement of said cam (24) is obtained by the extraction of the lock (20).

3. Antitheft device according to either one of Claims 1 and 2, **characterized in that** said cam (24) has an abutment (37) for said trigger element (28) in the locked position to prevent the sliding bolt (4) from reaching the unlocked position by the exercising of a force on the sliding bolt (4) that is distinct from that exerted by the driving slide-bar (10).

4. Antitheft device according to Claim 3, **characterized in that** said cam (24) has a generally cylindrical form of which a lateral face has a lateral ramp (34) to cooperate with the trigger element (28) and an immobilizing recess (35) including said abutment (37) at the end of said ramp (34) to cooperate with the trigger element (28) in the locked position.

5. Antitheft device according to any one of Claims 1 to 4, **characterized in that** said trigger element (28) is capable of sliding in a guide of said slide-bar (10) between a holding position in which said trigger element (28) is coupled to said super-locking means and the super-locked position in which said trigger element (28) is at a distance from said super-locking means.

6. Antitheft device according to Claim 5, **characterized in that** said super-locking means comprise a super-locking pin (40) having an orifice (42) suitable for receiving an end (44) of said trigger element (28) so that said trigger element (28) retains the super-locking pin (40) in the passive position.

7. Antitheft device according to Claim 6, **characterized in that** said super-locking means are borne by the sliding bolt (4) and **in that** said pin (40) is stressed against a corresponding recess (46) formed in said antitheft body.

8. Antitheft device according to any one of the preceding claims, **characterized in that** said antitheft body is formed by a first part (1) housing the locking means and said super-locking means and by a second part inside which the lock (20) is intended to be inserted and attached, said second part (2) being made of a material having a specific weight less than the specific weight of the material of said first part (1).

9. Antitheft device according to Claim 8, **characterized in that** said second part (2) is made at least partially of plastic and/or at least partially of magnesium.

10. Antitheft device according to either one of Claims 8 and 9, **characterized in that** said first part (1) is made of an alloy based on zinc, aluminium and magnesium.

11. Antitheft device according to any one of Claims 8 to 10, **characterized in that** said super-locking means are stressed in a super-locked position for immobilizing the sliding bolt (4) and retained in a passive position by the cooperation of said first (1) and said second part (2), so that the extraction of said second part (1, 2) releases said super-locking means in the super-locked position.
